# FASCICULE DE BREVET EUROPEEN

(11) **EP 2 436 073 B1**
(45) Date de publication et mention de la délivrance du brevet: **27.03.2013**
(21) Numéro de dépôt: 10728821.9
(22) Date de dépôt: 27.05.2010
(51) Int. Cl.: H01M 8/02, C03C 8/24

(54) **COMPOSITION VITREUSE AUTOCICATRISANTE, SON PROCEDE DE PREPARATION ET UTILISATIONS**
SELBSTHEILENDE GLASZUSAMMENSETZUNG, VERFAHREN ZU IHRER HERSTELLUNG UND IHRE VERWENDUNG
SELF-HEALING VITREOUS COMPOSITION, METHOD FOR PREPARING SAME, AND USES THEREOF

(30) Priorité: 27.05.2009 FR 0953490
(43) Date de publication de la demande: 04.04.2012
(73) Titulaire: Centre National de la Recherche Scientifique, 75016 Paris (FR)
(72) Inventeur: MONTAGNE, Lionel, F-62840 Laventie (FR); COILLOT, Daniel, F-62590 Oignies (FR); MEAR, François, F-59130 Lambersart (FR)
(74) Mandataire: Goulard, Sophie
(86) Numéro de dépôt international: PCT/FR2010/051012
(87) Numéro de publication internationale: WO 2010/136721

(56) Documents cités:
- EP-A1- 1 616 657
- EP-A2- 1 768 204
- GB-A- 1 230 975
- US-A- 5 965 266
- WENNING LIU, XIN SUN, MOHAMED A. KHALEEL: "Predicting young's modulus of glass/ceramic sealant for solid oxide fuel cell considering the combined effects of aging, micro-voids and self-healing" JOURNAL OF POWER SORCES, vol. 185, 2008, pages 1193-1200, XP002571077

## Description

La présente invention est relative à une composition vitreuse contenant un additif particulaire à base de vanadium, à son procédé de préparation, à son utilisation à titre de matériau autocicatrisant, en particulier pour la fabrication de joints de scellement dans les dispositifs fonctionnant à haute température tels que les piles à combustible et les électrolyseurs de la vapeur d'eau.

Les verres et les vitrocéramiques sont des matériaux rigides largement utilisés dans l'industrie, notamment pour la réalisation de joints de scellement dans divers dispositifs devant fonctionner à haute température, notamment entre 500 et 900°C. Parmi de tels dispositifs, on peut par exemple mentionner les piles à combustible (en particulier les piles à combustible à électrolyte solide ou « Solid Oxyde Fuel Cell ») qui fonctionnent à des températures de 700 à 900°C et les électrolyseurs de la vapeur d'eau utilisables pour la production d'hydrogène et fonctionnant également à très haute température. Dans ces deux cas particuliers, les compartiments anodiques et cathodiques doivent être séparés et étanches en raison de la présence d'hydrogène et d'oxygène. Lors de la mise en fonctionnement et de l'utilisation de ces dispositifs, les verres et vitrocéramiques qui y sont présents sont soumis à des cycles thermiques engendrant la formation de fissures. L'apparition de ces fissures diminue donc la longévité des dispositifs intégrant ce type de matériaux.

Deux types de méthode de cicatrisation des fissures formées dans les verres et les vitrocéramiques ont déjà été proposés.

Le premier type de méthode, dite « d'autocicatrisation intrinsèque » consiste, sans ajout d'aucun additif de cicatrisation, à combler les fissures ou à réparer l'état de surface d'un matériau de type verre, vitrocéramique ou composite métal/verre, par simple traitement thermique pour entraîner une modification physique du matériau, le plus souvent un ramollissement. Ce traitement est réalisé par chauffage du matériau ou du dispositif le contenant à une température supérieure à la température de fusion ou de ramollissement du matériau. Cependant, les températures utilisées pour provoquer une telle fusion ou un tel ramollissement sont souvent supérieures aux températures que peuvent supporter les dispositifs intégrant ces matériaux. C'est ainsi que Liu et al. (Journal of Power Sources, 2008, 185, 1193-1200) relatent le traitement thermique de piles à combustibles de type SOFC contenant des joints de scellement en verre à base d'un mélange BaO, SiO₂, AlO₃, CaO et B₂O₃, à une température supérieure à la température de fluage du verre, pour réparer les fissures formées tout en indiquant, cependant, qu'une limite de cette méthode est que la nécessité d'augmenter la température pour obtenir le fluage du verre provoque des déformations préjudiciables du système dans lequel il est incorporé.

Le second type de méthode, dite « d'autocicatrisation extrinsèque » consiste à ajouter un additif de cicatrisation dans la composition du matériau qui permet de combler les fissures par réaction chimique de cet additif. Cette seconde méthode s'applique aux matériaux de type polymère et céramiques/composite. Ainsi, le brevet US 5,965,266 décrit l'élaboration d'un matériau fibreux renforcé par une matrice céramique qui comprend une phase autocicatrisante contenant au moins un précurseur de verre, par exemple du tetraborure de carbone (B₄C) ou un système SiBC, et du carbone libre (10 à 35%). Une atmosphère oxydante, à une température d'au moins 450°C et n'excédant pas 850°C, provoque l'oxydation du carbone, ce qui provoque ensuite la transformation de la phase autocicatrisante en verre de manière à combler les fissures éventuellement présentes dans le matériau. Ce document enseigne par conséquent qu'un matériau composite contenant un précurseur de verre ayant la faculté de s'oxyder à une température inférieure ou égale 850°C, tel qu'un précurseur à base de bore et/ou de silicium, est autocicatrisant en atmosphère oxydante, lorsque la composition de précurseurs utilisée lors de son élaboration contient de 15 à 35% de carbone. Par ailleurs, White et al. (Nature, 2001, 409, 794-797) décrivent un matériau polymère autocicatrisant (poly-dicyclopentadiène) comprenant un agent autocicatrisant polymérisable microencapsulé (dicyclopentadiène) qui est libéré lors de l'apparition d'une fissure. La présence d'un catalyseur de polymérisation (catalyseur de Grubbs) dans la structure du matériau polymère est nécessaire pour entraîner la polymérisation de l'agent cicatrisant, à température ambiante, et le comblement des fissures. Le matériau obtenu après cicatrisation est cependant moins résistant qu'à l'état initial. Par ailleurs, cette technique de cicatrisation doit être réalisée à température ambiante et ne permet d'assurer une cicatrisation à n'importe quel endroit du matériau que si l'agent auto-cicatrisant polymérisable et le catalyseur sont à proximité immédiate l'un de l'autre et tous deux répartis de façon homogène dans la structure du matériau.

Il n'existe donc actuellement aucune composition de verre ou de vitrocéramique ayant la propriété d'autocicatriser de façon rapide aux températures de fonctionnement des dispositifs dans lesquels elle est destinée à être utilisée, en particulier à des températures d'utilisation allant de 400 à 900°C. Une autocicatrisation de type extrinsèque est préférable pour éviter le recours à une élévation de température au-delà de la température de fonctionnement des dispositifs.

Le but de la présente invention est de fournir une composition de verre ou de vitrocéramique ayant une telle propriété.

La présente invention a pour objet une composition vitreuse autocicatrisante comprenant au moins un oxyde formateur, et éventuellement un ou plusieurs oxydes modificateurs. Cette composition est caractérisée en ce qu'elle renferme en outre, sous forme de particules solides, au moins un additif de cicatrisation choisi parmi le vanadium et les alliages de vanadium.

La présence de vanadium et/ou d'un alliage de vanadium confère à cette composition la propriété d'être autocicatrisante dès des températures de l'ordre de 400 à 500°C, c'est-à-dire à des températures inférieures à celles mises en oeuvre habituellement pour les matériaux non-polymères selon les méthodes de cicatrisation intrinsèque et extrinsèque décrites dans l'art antérieur. Cette propriété est très avantageuse dans la mesure où elle permet d'augmenter la longévité de la composition vitreuse et des dispositifs l'incorporant car il n'est pas nécessaire d'atteindre des températures supérieures à la température de fluage de la composition vitreuse pour observer la cicatrisation. Les températures auxquelles cette composition vitreuse auto-cicatrise sont par ailleurs compatibles avec les températures normales de fonctionnement des dispositifs dans lesquels elle est susceptible d'être utilisée, ce qui permet d'éviter que ces dispositifs ne soient dégradés lors du processus de cicatrisation. Ainsi, le choix de l'additif de cicatrisation peut être effectué en fonction de la température à laquelle on souhaite obtenir l'effet cicatrisant. Enfin, et ainsi que cela est démontré dans les exemples illustrant la présente demande, la composition vitreuse conforme à l'invention, c'est-à-dire comprenant des particules de vanadium et/ou d'un alliage de vanadium à titre d'additif de cicatrisation, cicatrise plus rapidement que des compositions vitreuses non conformes à l'invention car contenant un additif de cicatrisation exempt de vanadium tel que par exemple du B₄C.

Les inventeurs ont mis en évidence que lorsque des fissures se forment dans la composition vitreuse de l'invention, et que cette composition est en contact avec de l'oxygène gazeux, l'additif de cicatrisation réagit rapidement avec l'oxygène pour former de l'oxyde de vanadium et éventuellement d'autres oxydes tel que par exemple du trioxyde de bore lorsque la composition vitreuse renferme le vanadium sous la forme d'un alliage avec un autre élément tel que par exemple bore (borure de vanadium). L'oxyde de vanadium, et éventuellement les autres oxydes formés, permettent alors de combler la fissure tout étant parfaitement compatibles avec les composants principaux de la matrice vitreuse (oxydes formateurs et modificateurs).

Au sens de la présente invention, on entend par composition vitreuse, les verres d'oxydes constitués d'une phase vitreuse (amorphe) et les vitrocéramiques constituées d'une phase vitreuse (de même nature que la phase vitreuse des verres d'oxydes) et d'une phase cristalline présente sous la forme de cristaux dispersés au sein de la phase vitreuse. Les vitrocéramiques résultent de la dévitrification contrôlée d'un verre chimiquement homogène par un traitement thermique à une température appropriée à la formation de germes de cristallisation. Ce traitement thermique est nommé céramisation.

Egalement au sens de la présente invention, on entend par « oxyde formateur », les oxydes d'éléments qui peuvent former, à eux seuls, le squelette de la composition vitreuse (matrice vitreuse). Les éléments formateurs les plus courants sont le silicium Si (sous sa forme oxyde SiO₂) qui est le constituant majoritaire des matrices vitreuses, le bore B (sous sa forme oxyde B₂O₃), le phosphore P (sous sa forme oxyde P₂O₅) et le germanium Ge (sous sa forme oxyde GeO₂).

Toujours au sens de la présente invention, on entend par « oxyde modificateur » (ou non-formateur), les oxydes d'éléments qui ne peuvent pas former de matrice vitreuse à eux seuls. Ce sont essentiellement les oxydes alcalins, alcalino-terreux et dans une moindre mesure certains oxydes d'éléments de transition ou de terres rares. Les oxydes alcalins, également appelés « fondants », sont utilisés pour abaisser la température de fusion de la matrice vitreuse. Ils comprennent notamment l'oxyde de sodium (Na₂O), l'oxyde de potassium (K₂O), et l'oxyde de lithium (Li₂O). D'autres oxydes, également appelés « stabilisants » sont utilisés pour modifier les propriétés physiques et/ou mécaniques de la matrice vitreuse généralement atténuées par l'adjonction des fondants. Ils comprennent les oxydes alcalino-terreux comme l'oxyde de calcium (CaO) qui augmente la résistance chimique du verre, l'oxyde de zinc (ZnO) qui augmente l'éclat et l'élasticité du verre, l'oxyde de fer (Fe₂O₃) qui est la fois un stabilisant et un colorant et l'oxyde de plomb (PbO) qui entre dans la composition du cristal et qui abaisse également le point de fusion en stabilisant la composition vitreuse.

Selon une forme de réalisation préférée de l'invention, les oxydes formateurs et les oxydes modificateurs sont choisis parmi les oxydes d'éléments choisis parmi le silicium, le bore, le phosphore, l'aluminium, les alcalins, les alcalino-terreux, le fer et le zinc.

Selon l'invention, les alliages de vanadium sont de préférence choisis parmi les alliages composés de vanadium et d'au moins un élément additionnel choisi parmi les éléments métalliques de numéro atomique 22 à 31, 39 à 42, 44, 47 à 51, 82 et 83 et les éléments non métalliques de numéro atomique 5 à 7, 13 à 15, 33 et 52.

Selon une forme de réalisation préférée de l'invention, l'additif de cicatrisation est choisi parmi le vanadium (V), et les alliages de vanadium choisis parmi le borure de vanadium (VB), le diborure de vanadium (VB₂), le tetraborure de vanadium (VB₄), le carbure de vanadium (VC), le siliciure de vanadium (VSi₂), le sulfure de vanadium, le phosphure de vanadium (VP) et leurs mélanges. Selon une forme de réalisation particulièrement préférée de l'invention, l'additif de cicatrisation est choisi parmi le vanadium, le borure de vanadium, le carbure de vanadium et leurs mélanges.

Selon le choix de l'additif de cicatrisation, on pourra moduler la température de cicatrisation. Ainsi, le vanadium (V) s'oxyde dès 350°C, VB dès 400°C et VC dès 350°C.

Les particules solides de l'additif de cicatrisation utilisables dans la composition vitreuse de l'invention ont de préférence une taille moyenne de 1 à 60 µm environ, et de préférence de 1 à 10 µm environ.

Au sein de la composition vitreuse conforme à la présente invention, l'additif de cicatrisation représente de préférence de 5 à 20 % environ en volume par rapport au volume total de la composition, et encore plus préférentiellement de 5 à 10 % environ en volume.

Bien que l'effet de cicatrisation soit lié à une proportion volumique d'additif, on peut aussi exprimer la quantité d'additif de cicatrisation en pourcentage massique. Dans ce cas, au sein de la composition vitreuse conforme à la présente invention, l'additif de cicatrisation représente de préférence de 1 à 4 % environ en masse par rapport à la masse totale de la composition, et encore plus préférentiellement de 1 à 2 % environ en masse.

En plus de l'additif de cicatrisation à base de vanadium, la composition conforme à l'invention peut renfermer en outre un ou plusieurs additifs de cicatrisation additionnels utilisés habituellement dans les compositions autocicatrisantes et parmi lesquels on peut citer, à titre d'exemple, le bore (B), le tetraborure de carbone (B₄C), le nitrure de bore (BN), le nitrure de silicium (Si₃N₄) et le carbure de silicium (SiC).

Lorsqu'ils sont utilisés, lesdits additifs de cicatrisation additionnels représentent de préférence de 1 à 4 % environ en masse par rapport à la masse totale de la composition vitreuse.

Lorsque la composition vitreuse autocicatrisante conforme à l'invention est une composition de vitrocéramique, elle peut en outre renfermer au moins un additif favorisant la nucléation et permettant d'obtenir une meilleure répartition (plus homogène) des cristaux. Il s'agit le plus souvent de fluorures tels que par exemple du fluorure de calcium (CaF₂) ou de phosphates tels que par exemple du phosphate de lithium (Li₃PO₄).

La composition vitreuse conforme à l'invention peut être préparée par un procédé simple, rapide et peu couteux à mettre en oeuvre.

L'invention a donc également pour objet un procédé de préparation d'une composition vitreuse autocicatrisante (CVA) conforme à l'invention et telle que définie précédemment, caractérisé en ce qu'il comprend au moins les étapes suivantes :
- une première étape de préparation d'une composition vitreuse pulvérulente (CVP) constituée de particules solides, par broyage d'une composition vitreuse non pulvérulente (CVNP) comprenant au moins un oxyde formateur, et éventuellement un ou plusieurs oxydes modificateurs ;
- une deuxième étape de préparation d'une composition vitreuse pulvérulente autocicatrisante (CVPA) par mélange de la composition vitreuse pulvérulente issue de la première étape (CVP) avec des particules solides d'au moins un additif de cicatrisation choisi parmi le vanadium et les alliages de vanadium ; et
- une troisième étape de densification de la composition vitreuse pulvérulente autocicatrisante (CVPA) issue de la deuxième étape, par traitement thermique sous atmosphère inerte.

Selon l'invention, on entend par composition vitreuse non pulvérulente, toute composition de verre préparée par les méthodes de fusion traditionnellement utilisées pour l'élaboration de verres.

Lors de la première étape, le broyage de la CVNP est effectué jusqu'à obtention de particules solides ayant de préférence une taille moyenne de 1 à 60 µm, et encore plus préférentiellement de 1 à 10 µm. Ce broyage peut être réalisé par toute technique de broyage classique et connue de l'homme du métier.

Selon l'invention, lors de la deuxième étape, les alliages de vanadium sont de préférence choisis parmi les alliages composés de vanadium et d'au moins un élément additionnel choisi parmi les éléments métalliques de numéro atomique 22 à 31, 39 à 42, 44, 47 à 51, 82 et 83 et les éléments non métalliques de numéro atomique 5 à 7, 13 à 15, 33 et 52.

Lors de la deuxième étape, en plus de l'additif de cicatrisation à base de vanadium, on peut également ajouter à la CVP, un ou plusieurs additifs de cicatrisation additionnels classiques utilisés habituellement dans les compositions autocicatrisantes et parmi lesquels on peut citer, à titre d'exemple, le bore (B), le tetraborure de bore (B₄C), le nitrure de bore (BN), le nitrure de silicium (Si₃N₄) et le carbure de silicium (SiC).

Le mélange de la CVP avec les particules solides de l'additif de cicatrisation (à base de vanadium et éventuellement de l'additif de cicatrisation additionnel) lors de la deuxième étape, est de préférence réalisé par la méthode des ajouts progressifs ou à l'aide d'un mélangeur mécanique, ces deux techniques de mélange permettant en effet d'obtenir une répartition homogène des particules d'additif de cicatrisation dans la CVP.

Il est important de réaliser la troisième étape de densification sous atmosphère inerte (argon, azote par exemple), de façon à éviter toute oxydation prématurée de l'additif de cicatrisation pour que celui-ci puisse ensuite réagir avec de l'oxygène gazeux lors de l'apparition d'une fissure dans la composition vitreuse autocicatrisante de l'invention. Après densification, la composition vitreuse autocicatrisante de l'invention peut donc être utilisée en atmosphère oxydante sans restriction.

Selon une forme de réalisation particulière et préférée du procédé conforme à l'invention, le traitement thermique de densification réalisé lors de la troisième étape, comporte au moins :
i) une première sous-étape de montée rapide en température, par exemple à une vitesse de 30°C/min environ, jusqu'à la température de densification de la CVPA, ladite température de densification étant déterminée à partir de la température de ramollissement dilatométrique de la CVNP utilisée lors de la première étape, ou à l'aide d'un microscope chauffant,
ii) une deuxième sous-étape de maintien de la température de densification pendant une durée de 1 à 2 heures environ, et
iii) une troisième sous-étape de refroidissement jusqu'à température ambiante, par exemple à une vitesse de 10 à 20°C/min environ.

Selon une première variante du procédé conforme à l'invention, la composition vitreuse autocicatrisante est destinée à être utilisée comme joint de scellement dans un dispositif fonctionnant à haute température (c'est-à-dire à une température de 400 à 900°C). Dans ce cas, le procédé conforme à l'invention comprend en outre, avant la troisième étape de densification, une étape supplémentaire de réalisation des joints de scellement au moyen de la CVPA au sein dudit dispositif. Pour ce faire, on utilise la CVPA comme une fritte de verre classique, puis on soumet le dispositif dans lequel les joints de scellement ont été réalisés, au traitement thermique de densification défini ci-dessus à la troisième étape. Dans ce cas, la CVPA renferme de préférence au moins un additif choisi parmi les barbotines, les liants et les additifs d'aide au frittage. Le traitement thermique de la CVPA est de préférence effectué selon un procédé comprenant, outre les sous-étapes i) à iii) détaillées ci-dessus, une sous-étape supplémentaire et préliminaire à la sous-étape i) au cours de laquelle la CVPA est soumise à un chauffage lent, par exemple à une vitesse de 1 °C/min environ, jusqu'à une température d'environ 450°C. Cette sous-étape préliminaire de chauffage lent permet le déliantage de la CVPA.

Selon une deuxième variante du procédé, la composition vitreuse autocicatrisante est destinée à être mise en oeuvre seule (en dehors de tout dispositif), par exemple pour la fabrication de matériaux massifs autocicatrisants. Dans ce cas, le procédé de préparation conforme à l'invention comprend en outre, avant la réalisation de la troisième étape de densification, une étape de mise en forme de la CVPA, par exemple par pressage uniaxial.

Lorsque la CVA est une vitrocéramique, le procédé conforme à l'invention comprend alors en outre, après la troisième étape de densification, une quatrième étape de céramisation par traitement thermique. La température et la durée de cette quatrième étape peuvent être déterminées par les méthodes traditionnellement utilisées dans le domaine, généralement au moyen d'une caractérisation préalable par analyse thermique différentielle (ATD).

Enfin, l'invention a pour objet les différentes utilisations de la composition vitreuse autocicatrisante conforme à l'invention et telle que définie précédemment.

Elle a en particulier pour objet, l'utilisation d'une composition vitreuse autocicatrisante telle que définie précédemment, à titre de matériau autocicatrisant, notamment pour la fabrication de joints de scellement dans des dispositifs fonctionnant à une température de 400°C à 900°C, tels que les piles à combustible à électrolyte solide et les électrolyseurs de la vapeur d'eau.

Un autre objet de l'invention est l'utilisation d'une composition vitreuse autocicatrisante telle que définie précédemment pour la fabrication d'un revêtement vitreux ou vitrocéramique de type émail, et notamment pour la fabrication d'un revêtement de protection contre la corrosion à haute température (c'est-à-dire à une température de 400 à 900°C).

La présente invention est illustrée par l'exemple de réalisation suivant, auquel elle n'est cependant pas limitée.

### EXEMPLE

### Préparation d'une vitrocéramique autocicatrisante

### 1) Préparation de compositions de vitrocéramique renfermant du borure de vanadium à titre d'additif de cicatrisation

Dans cet exemple on a préparé une vitrocéramique autocicatrisante à partir d'une composition de verre (Verre 1) dérivée d'une composition de verre précurseur de vitrocéramique de scellement issue de la référence : Lara et al., « Sintering of glasses in the system RO-Al2-BaO-SiO2 (R=Ca, Mg, Zn) studied by hot-stage microscopy », Solid State Ionics, 2004, 170, 201-208.

Verre 1 avait la composition suivante, exprimée en pourcentages molaires :
- CaO: 14-15 ;
- BaO : 28-29 ;
- Al₂O₃ : 9-10 ;
- SiO₂ : 47-48.

Dans la composition Verre 1, la taille moyenne des particules était d'environ 50 µm.

La composition Verre 1 a ensuite été mélangée à des particules de borure de vanadium ayant une taille moyenne de 50 µm, à raison de 10 % en volume, par la méthode des ajouts progressifs.

Le mélange résultant (« Mélange 1 ») a ensuite été mis en forme, par pressage uniaxial à une pression de 1000 kg.cm⁻², dans une matrice cylindrique en acier inoxydable (diamètre : 1,2 cm).

On a obtenu un cylindre constitué du Mélange 1 compressé, de dimensions suivantes : longueur : 0,7 cm ; diamètre : 1,2 cm. Ce cylindre a ensuite été densifié à une température 1000°C, sous argon, durant 1 h dans un four électrique. La densité de la vitrocéramique ainsi obtenue (VTC 10) était proche de 100% de la densité théorique (environ 3,75 g.cm⁻³). Ce traitement athermique a aussi permis la vitro-céramisation du matériau, conformément à la méthode exposée dans Lara *et al.* (*ibid*).

On a ainsi préparé, dans les mêmes conditions, les vitrocéramiques VTC 5, VTC 15, et VTC 20, contenant respectivement 5 %, 15 % et 20 % en volume de borure de vanadium pour 100 volumes de composition de Verre 1.

A titre comparatif, une vitrocéramique ne contenant pas de borure de vanadium a été préparée (VTC 0) à partir de la composition de Verre 1, dans les mêmes conditions que celles utilisées ci-dessus pour préparer VTC 10.

### 2) Mise en évidence des propriétés d'autocicatrisation des vitrocéramiques conformes à l'invention

Les propriétés d'expansion thermique de toutes ces vitrocéramiques ont ensuite été étudiées par analyse thermomécanique à l'aide d'un analyseur thermomécanique commercialisé sous la dénomination TMA SETSYS par la société SETARAM. Les courbes ont été enregistrées à une vitesse de 10°C.min⁻¹, entre 200 °C et 1000°C.

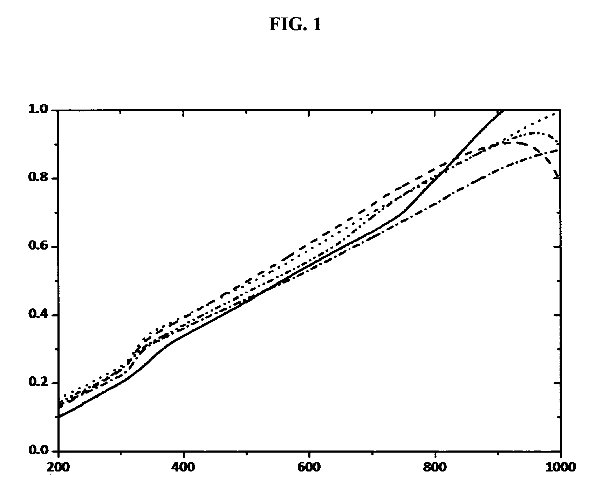

Les courbes obtenues sont présentées sur la figure 1 annexée sur laquelle la dilation (en %) est fonction de la température (en °C). Sur cette figure, la courbe en trait continu correspond à VTC 0 ; la courbe en traits discontinus correspond à VTC 5, la courbe en pointillés correspond à VTC 10 ; la courbe en tirets et pointillés alternés correspond à VTC 15 et la courbe en tirets et doubles pointillés alternés correspond à VTC 20.

Ces courbes démontrent que les propriétés d'expansion thermique des vitrocéramiques conformes à la présente invention (VTC 5, VTC 10, VTC 15 et VTC 20) ne sont pas affectées par la présence des particules de borure de vanadium à titre d'additif de cicatrisation.

Une fracture a été réalisée sur le cylindre de VTC 10. Cette fracture avait les dimensions suivantes : longueur totale : 1,2 cm, profondeur totale : 0,7 cm, largeur moyenne : 0,01 cm. Le cylindre fracturé a été soumis à un traitement thermique de 1 h à 700°C sous air statique, pour simuler les conditions d'utilisation. Cette température est inférieure à la température de transition vitreuse (Tg) du verre (Tg = 760°C) de manière à se placer dans des conditions où l'autocicatrisation intrinsèque, c'est-à-dire par ramollissement, ne peut pas se produire.

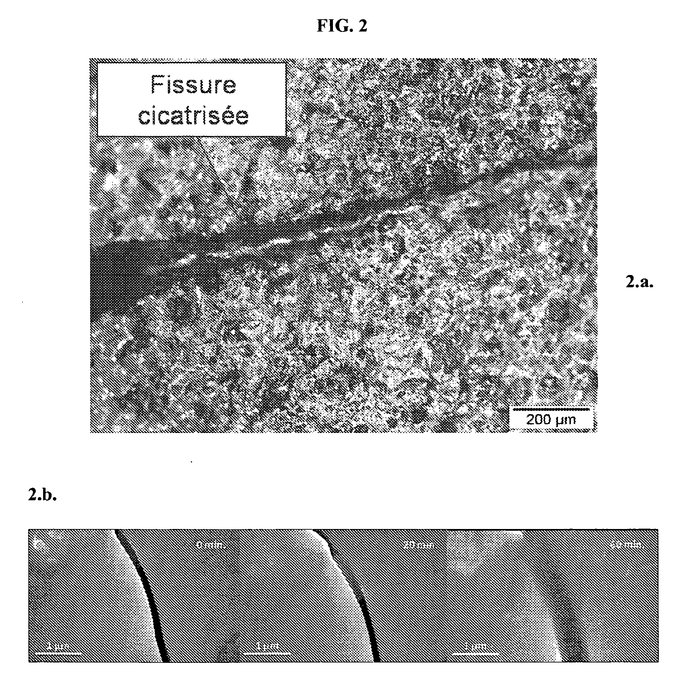

La figure 2-a annexée est une photographie prise par microscopie optique (grossissement x 10) de la vitrocéramique après le traitement thermique. La figure 2-b annexée est une micrographie prise par microscopie électronique environnementale (grossissement x 20 000) de la vitrocéramique avant le traitement thermique (0 min.), au bout de 20 minutes de traitement athermique (20 min.) et au bout de 60 minutes de traitement thermique (60 min.).

On observe sur les figures 2-a et 2-b qu'à la température de 700°C, l'oxydation de VB est rapide et conduit à l'autocicatrisation de la fissure. En effet, les figures 2-a et 2-b montrent que la fissure est comblée par une ou plusieurs phases issues de l'oxydation de VB.

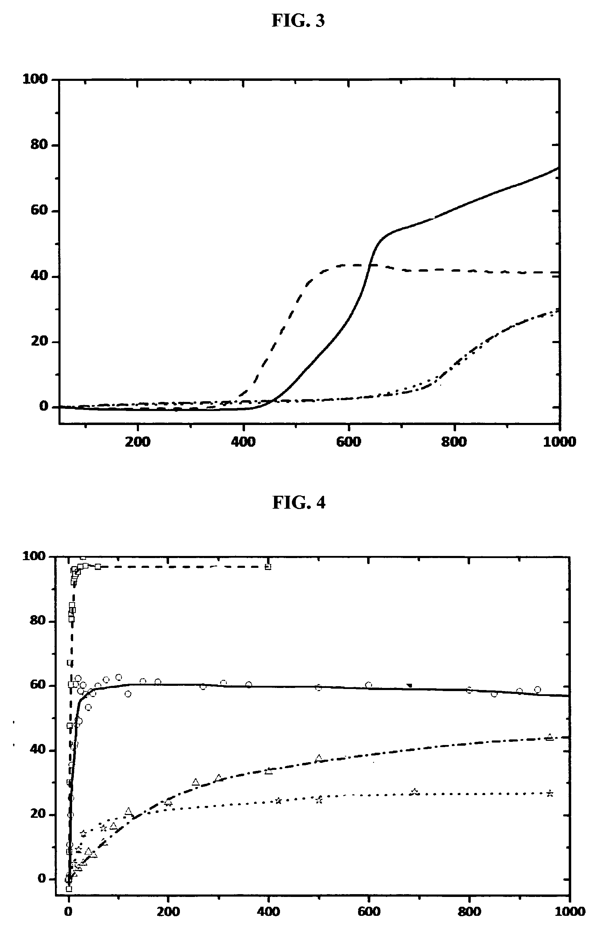

Afin de tester la réactivité des particules d'additif de cicatrisation à base de vanadium conforme à la présente invention, on a comparé, par analyse thermogravimétrique sous flux d'air (20 cm³.min⁻¹), à l'aide d'un analyseur thermogravimétrique commercialisé sous la dénomination TGA SETSYS par la société SETARAM, les températures d'oxydation de particules de borure de vanadium (VB) ou de carbure de vanadium (VC) seules à celles de particules de tetraborure de carbone (B₄C) et de bore (B) seules. La figure 3 annexée montre les courbes d'oxydation obtenues par analyse thermogravimétrique (ATG) de ces différentes particules contenant ou non du vanadium en fonction de la température. Sur cette figure, le gain de masse des particules dû à l'oxydation (en %) est fonction de la température (en °C). La courbe en trait continu correspond à VB, la courbe en traits discontinus correspond à VC, la courbe en pointillés correspond à B et la courbe en traits discontinus et pointillés alternés correspond à B₄C.

On constate que les particules à base de vanadium utilisables à titre d'additif de cicatrisation selon l'invention (VB et VC) commencent à s'oxyder dès 350°C dans le cas de VC et 400°C dans le cas de VB, c'est-à-dire à des températures nettement inférieures aux températures nécessaires pour entraîner l'oxydation des particules de B₄C et de B (supérieures à 800°C : températures supérieures de ramollissement ou fluage du matériau où elles seraient incorporées).

On a également comparé, par analyse gravimétrique, la vitesse d'oxydation de ces différentes particules (VB, VC, B₄C et B) en fonction du temps. Les résultats obtenus sont présentés sur la figure 4 annexée, sur laquelle le rapport Δm/m, correspondant à la différence (Δm) entre la masse d'une particule oxydée et la masse d'une particule non oxydée/masse (m) d'une particule non oxydée, est fonction du temps en minute. Sur cette figure, la courbe en traits discontinus correspond à VC, la courbe en trait continu correspond à VB, la courbe en tirets et pointillés alternés correspond à B₄C et la courbe en pointillés correspond à B.

On constate sur les courbes présentées sur cette figure 4, que les particules de VB et de VC s'oxydent très rapidement (quelques minutes), alors que les particules de B₄C et de B s'oxydent nettement plus lentement.

L'ensemble des résultats présentés dans cet exemple démontre que la présence des particules d'additif de cicatrisation à base de vanadium dans une composition de verre ou de vitrocéramique conformément à l'invention n'altère en rien ses propriétés d'expansion thermique et permet d'induire une autocicatrisation rapide du verre ou de la vitrocéramique à une température inférieure à la température de fusion du matériau (dès 350°C), ce qui ne serait pas le cas avec des particules exemptes de vanadium telles que B₄C et B.

## Revendications

1. Composition vitreuse autocicatrisante comprenant au moins un oxyde formateur, et éventuellement un ou plusieurs oxydes modificateurs, **caractérisée en ce qu'**elle renferme en outre, sous forme de particules solides, au moins un additif de cicatrisation choisi parmi le vanadium et les alliages de vanadium.

2. Composition selon la revendication 1, **caractérisée en ce que** les oxydes formateurs et les oxydes modificateurs sont choisis parmi les oxydes d'éléments choisis parmi le silicium, le bore, le phosphore, l'aluminium, les alcalins, les alcalino-terreux, le fer et le zinc.

3. Composition selon la revendication 1 ou 2, **caractérisée en ce que** les alliages de vanadium sont choisis parmi les alliages composés de vanadium et d'au moins un élément additionnel choisi parmi les éléments métalliques de numéro atomique 22 à 31, 39 à 42, 44, 47 à 51, 82 et 83 et les éléments non métalliques de numéro atomique 5 à 7, 13 à 15, 33 et 52.

4. Composition selon l'une quelconque des revendications précédentes, **caractérisée en ce que** l'additif de cicatrisation est choisi parmi le vanadium, et les alliages de vanadium choisis parmi le borure de vanadium, le diborure de vanadium, le tetraborure de vanadium, le carbure de vanadium, le siliciure de vanadium, le sulfure de vanadium, le phosphure de vanadium et leurs mélanges.

5. Composition selon la revendication 4, **caractérisée en ce que** l'additif de cicatrisation est choisi parmi le vanadium, le borure de vanadium, le carbure de vanadium et leurs mélanges.

6. Composition selon l'une quelconque des revendications précédentes, **caractérisée en ce que** les particules solides de l'additif de cicatrisation ont une taille moyenne de 1 à 60 µm.

7. Composition selon l'une quelconque des revendications précédentes, **caractérisée en ce que** l'additif de cicatrisation représente de 5 à 20 % en volume par rapport au volume total de la composition.

8. Composition selon l'une quelconque des revendications précédentes, **caractérisée en ce qu'**elle renferme en outre un ou plusieurs additifs de cicatrisation additionnels choisis parmi le bore, le tetraborure de carbone, le nitrure de bore, le nitrure de silicium et le carbure de silicium.

9. Composition selon la revendication 8, **caractérisée en ce que** lesdits additifs de cicatrisation additionnels représentent de 1 à 4 % en masse par rapport à la masse totale de la composition vitreuse.

10. Procédé de préparation d'une composition vitreuse autocicatrisante telle que définie à l'une quelconque des revendications 1 à 9, **caractérisé en ce qu'**il comprend au moins les étapes suivantes :
- une première étape de préparation d'une composition vitreuse pulvérulente constituée de particules solides, par broyage d'une composition vitreuse non pulvérulente comprenant au moins un oxyde formateur, et éventuellement un ou plusieurs oxydes modificateurs ;
- une deuxième étape de préparation d'une composition vitreuse pulvérulente autocicatrisante par mélange de la composition vitreuse pulvérulente issue de la première étape avec des particules solides d'au moins un additif de cicatrisation choisi parmi le vanadium et les alliages de vanadium ; et
- une troisième étape de densification de la composition vitreuse pulvérulente autocicatrisante issue de la deuxième étape, par traitement thermique sous atmosphère inerte.

11. Procédé selon la revendication 10, **caractérisé en ce que** le mélange de la composition vitreuse pulvérulente avec les particules solides de l'additif de cicatrisation lors de la deuxième étape est réalisé par la méthode des ajouts progressifs ou à l'aide d'un mélangeur mécanique.

12. Procédé selon la revendication 10 ou 11, **caractérisé en ce que** le traitement thermique de densification réalisé lors de la troisième étape, comporte au moins :
i) une première sous-étape de montée rapide en température, à une vitesse de 30°C/min, jusqu'à la température de densification de la composition vitreuse pulvérulente autocicatrisante, ladite température de densification étant déterminée à partir de la température de ramollissement dilatométrique de la composition vitreuse non pulvérulente utilisée lors de la première étape, ou à l'aide d'un microscope chauffant,
ii) une deuxième sous-étape de maintien de la température de densification pendant une durée de 1 à 2 heures, et
iii) une troisième sous-étape de refroidissement jusqu'à température ambiante, à une vitesse de 10 à 20°C/min.

13. Procédé selon l'une quelconque des revendications 10 à 12, **caractérisé en ce que** la composition vitreuse autocicatrisante est destinée à être utilisée comme joint de scellement dans un dispositif fonctionnant à haute température et **en ce que** ledit procédé comprend en outre, avant la troisième étape de densification, une étape supplémentaire de réalisation des joints de scellement au moyen de la composition vitreuse pulvérulente autocicatrisante au sein dudit dispositif, puis on soumet le dispositif dans lequel les joints de scellement ont été réalisés, audit traitement thermique de densification.

14. Procédé selon la revendication 13, **caractérisé en ce que** la composition vitreuse pulvérulente autocicatrisante renferme au moins un additif choisi parmi les barbotines, les liants et les additifs d'aide au frittage.

15. Procédé selon la revendication 13 ou 14, **caractérisé en ce que** le traitement thermique de la composition vitreuse pulvérulente autocicatrisante est effectué selon un procédé comprenant, outre les sous-étapes i) à iii) définies ci-dessus à la revendication 12, une sous-étape supplémentaire et préliminaire à la sous-étape i) au cours de laquelle la composition vitreuse pulvérulente autocicatrisante est soumise à un chauffage lent, à une vitesse de 1°C/min, jusqu'à une température de 450°C.

16. Procédé selon l'une quelconque des revendications 10 à 12, **caractérisé en ce que** la composition vitreuse autocicatrisante est destinée à être mise en oeuvre pour la fabrication de matériaux massifs autocicatrisants et **en ce que** ledit procédé comprend en outre, avant la réalisation de la troisième étape de densification, une étape de mise en forme de la composition vitreuse pulvérulente autocicatrisante.

17. Procédé selon l'une quelconque des revendications 10 à 16, **caractérisé en ce que** la composition vitreuse autocicatrisante est une vitrocéramique et **en ce que** ledit procédé comprend en outre, après la troisième étape de densification, une quatrième étape de céramisation par traitement thermique.

18. Utilisation d'une composition vitreuse autocicatrisante telle que définie à l'une quelconque des revendications 1 à 9, à titre de matériau autocicatrisant.

19. Utilisation selon la revendication 18, pour la fabrication de joints de scellement dans des dispositifs fonctionnant à une température de 400°C à 900°C.

20. Utilisation d'une composition vitreuse autocicatrisante telle que définie à l'une quelconque des revendications 1 à 9, pour la fabrication d'un revêtement de protection contre la corrosion à haute température.

## Claims

1. A self-healing vitreous composition comprising at least one network-forming oxide and optionally one or more modifying oxides, **characterized in that** it further contains, in the form of solid particles, at least one healing additive chosen from vanadium and vanadium alloys.

2. The composition as claimed in claim 1, **characterized in that** the network-forming oxides and the modifying oxides are chosen from oxides of elements chosen from silicon, boron, phosphorus, aluminum, alkali metals, alkaline-earth metals, iron and zinc.

3. The composition as claimed in claim 1 or 2, **characterized in that** the vanadium alloys are chosen from alloys composed of vanadium and at least one additional element chosen from the metallic elements of atomic number 22 to 31, 39 to 42, 44, 47 to 51, 82 and 83 and the non-metallic elements of atomic number 5 to 7, 13 to 15, 33 and 52.

4. The composition as claimed in any one of the preceding claims, **characterized in that** the healing additive is chosen from vanadium, and vanadium alloys chosen from vanadium boride, vanadium diboride, vanadium tetraboride, vanadium carbide, vanadium silicide, vanadium sulfide, vanadium phosphide and mixtures thereof.

5. The composition as claimed in claim 4, **characterized in that** the healing additive is chosen from vanadium, vanadium boride, vanadium carbide and mixtures thereof.

6. The composition as claimed in any one of the preceding claims, **characterized in that** the solid particles of the healing additive have a mean size of 1 to 60 µm.

7. The composition as claimed in any one of the preceding claims, **characterized in that** the healing additive represents from 5 to 20% by volume relative to the total volume of the composition.

8. The composition as claimed in any one of the preceding claims, **characterized in that** it further contains one or more additional healing additives chosen from boron, carbon tetraboride, boron nitride, silicon nitride and silicon carbide.

9. The composition as claimed in claim 8, **characterized in that** said additional healing additives represent from 1 to 4% by weight relative to the total weight of the vitreous composition.

10. A method of preparing a self-healing vitreous composition as defined in any one of claims 1 to 9, **characterized in that** it comprises at least the following steps:
- a first step of preparing a pulverulent vitreous composition consisting of solid particles, by milling a non-pulverulent vitreous composition comprising at least one network-forming oxide and optionally one or more modifying oxides;
- a second step of preparing a self-healing pulverulent vitreous composition by blending the pulverulent vitreous composition resulting from the first step with solid particles of at least one healing additive chosen from vanadium and vanadium alloys; and
- a third step of densifying the self-healing pulverulent vitreous composition resulting from the second step, by heat treatment in an inert atmosphere.

11. The method as claimed in claim 10, **characterized in that** the blending of the pulverulent vitreous composition with the solid particles of the healing additive during the second step is carried out by the method of progressive additions or using a mechanical blender.

12. The method as claimed in claim 10 or 11, **characterized in that** the densification heat treatment carried out during the third step comprises at least:
i) a first substep in which the temperature is rapidly raised at a rate of 30°C/min, up to the densification temperature of the self-healing pulverulent vitreous composition, said densification temperature being determined from the dilatometric softening temperature of the non-pulverulent vitreous composition used during the first step, or by means of a heating microscope;
ii) a second substep in which the densification temperature is maintained for a time of 1 to 2 hours; and
iii) a third substep of cooling down to room temperature at a rate of 10 to 20°C/min.

13. The method as claimed in any one of claims 10 to 12, **characterized in that** the self-healing vitreous composition is intended to be used as a seal in a device operating at high temperature and **in that** said method further includes, before the densification third step, an additional step of producing the seals by means of the self-healing pulverulent vitreous composition within said device and then the device in which the seals have been produced undergoes said densification heat treatment.

14. The method as claimed in claim 13, **characterized in that** the self healing pulverulent vitreous composition contains at least one additive chosen from slips, binders and sintering aids.

15. The method as claimed in claim 13 or 14, **characterized in that** the heat treatment of the self-healing pulverulent vitreous composition is carried out according to a method comprising, apart from substeps i) to iii) defined above in claim 12, an additional substep prior to substep i), during which the self-healing pulverulent vitreous composition is slowly heated, at a rate of 1 °C/min, up to a temperature of 450°C.

16. The method as claimed in any one of claims 10 to 12, **characterized in that** the self-healing vitreous composition is intended to be used for manufacturing bulk self-healing materials and **in that** said method further includes, before the densification third step is carried out, a step of forming the self-healing pulverulent vitreous composition.

17. The method as claimed in any one of claims 10 to 16, **characterized in that** the self-healing vitreous composition is a glass-ceramic and **in that** said method further includes, after the densification third step, a fourth step of ceramization by heat treatment.

18. The use of a self-healing vitreous composition as defined in any one of claims 1 to 9 as self-healing material.

19. The use as claimed in claim 18 for the manufacture of seals in devices operating at a temperature of 400°C to 900°C.

20. The use of a self-healing vitreous composition as defined in any one of claims 1 to 9 for the manufacture of a coating for corrosion protection at high temperature.

## Patentansprüche

1. Selbstheilende Glaszusammensetzung, die mindestens bildendes Oxid und eventuell ein oder mehrere modifizierende Oxide umfasst, **dadurch gekennzeichnet, dass** sie ferner mindestens einen Heilungszusatz in Form fester Teilchen einschließt, der aus dem Vanadium und den Vanadiumlegierungen ausgewählt ist.

2. Zusammensetzung nach Anspruch 1, **dadurch gekennzeichnet, dass** die bildenden Oxide und die modifizierenden Oxide aus den Oxiden von Elementen ausgewählt sind, die aus dem Silizium, dem Bor, dem Phosphor, dem Aluminium, den Alkali, den Erdalkali, dem Eisen und dem Zink ausgewählt sind.

3. Zusammensetzung nach Anspruch 1 oder 2, **dadurch gekennzeichnet, dass** die Vanadiumlegierungen aus den Legierungen ausgewählt sind, die aus Vanadium und mindestens einem zusätzlichen Element zusammengesetzt sind, das aus den Metallelementen mit der Atomnummer 22 bis 31, 39 bis 42, 44, 47 bis 51, 82 bis 83 und den nichtmetallischen Elementen mit der Atomnummer 5 bis 7, 13 bis 15, 33 bis 52 ausgewählt ist.

4. Zusammensetzung nach einem der vorangehenden Ansprüche, **dadurch gekennzeichnet, dass** der Heilungszusatz aus dem Vanadium und den Vanadiumlegierungen ausgewählt ist, die aus dem Vanadiumborid, dem Vanadiumdiborid, dem Vanadiumtetraborid, dem Vanadiumcarbid, dem Vanadiumsilicid, dem Vanadiumsufid, dem Vanadiumphosphid und ihren Gemischen ausgewählt sind.

5. Zusammensetzung nach Anspruch 4, **dadurch gekennzeichnet, dass** der Heilungszusatz aus dem Vanadium, dem Vanadiumborid, dem Vanadiumcarbid und ihren Gemischen ausgewählt ist.

6. Zusammensetzung nach einem der vorangehenden Ansprüche, **dadurch gekennzeichnet, dass** die festen Teilchen des Heilungszusatzes eine durchschnittliche Größe von 1 bis 60 µm haben.

7. Zusammensetzung nach einem der vorangehenden Ansprüche, **dadurch gekennzeichnet, dass** der Heilungszusatzes 5 bis 20 Vol.-% im Verhältnis zum Gesamtvolumen der Zusammensetzung darstellt.

8. Zusammensetzung nach einem der vorangehenden Ansprüche, **dadurch gekennzeichnet, dass** sie ferner einen oder mehrere zusätzliche Heilungszusätze einschließt, die aus dem Bor, dem Carbon-Tetraborid, dem Bornitrid, dem Siliziumnitrid und dem Siliziumcarbid ausgewählt sind.

9. Zusammensetzung nach Anspruch 8, **dadurch gekennzeichnet, dass** die Heilungszusätze 1 bis 4 Ma% im Verhältnis zur Gesamtmasse der Glaszusammensetzung darstellen.

10. Herstellungsverfahren einer selbstheilenden Glaszusammensetzung, wie in einem der Ansprüche 1 bis 9 definiert, **dadurch gekennzeichnet, dass** es mindestens die folgenden Schritte umfasst:
- einen ersten Schritt der Herstellung einer pulverförmigen Glaszusammensetzung, die aus festen Teilchen besteht, durch Zerkleinern einer nicht pulverförmigen Glaszusammensetzung, die mindestens ein bildendes Oxid und eventuell ein oder mehrere modifizierende Oxide umfasst,
- einen zweiten Schritt der Herstellung einer selbstheilenden pulverförmigen Glaszusammensetzung durch Mischen der pulverförmigen Glaszusammensetzung, die aus dem ersten Schritt hervorgegangen ist, mit festen Teilchen mindestens eines Heilungszusatzes, der aus dem Vanadium und den Vanadiumlegierungen ausgewählt ist, und
- einen dritten Schritt der Verdichtung der selbstheilenden pulverförmigen Glaszusammensetzung, die aus dem zweiten Schritt hervorgegangen ist, durch thermische Behandlung unter inerter Atmosphäre.

11. Verfahren nach Anspruch 10, **dadurch gekennzeichnet, dass** das Gemisch der pulverförmigen Glaszusammensetzung mit den festen Teilchen des Heilungszusatzes während des zweiten Schritts anhand der Methode des schrittweisen Hinzufügens oder mit Hilfe eines mechanischen Mischers durchgeführt wird.

12. Verfahren nach Anspruch 10 oder 11, **dadurch gekennzeichnet, dass** die Wärmebehandlung zwecks Verdichtung, die während des dritten Schritts durchgeführt wird, mindestens aufweist.
i) einen ersten Teilschritt des schnellen Temperaturanstiegs mit einer Geschwindigkeit von 30 °C/min auf eine Verdichtungstemperatur der selbstheilenden pulverförmigen Glaszusammensetzung, wobei die Verdichtungstemperatur ausgehend von der dilatometrischen Erweichungstemperatur der nicht pulverförmigen Glaszusammensetzung bestimmt wird, die während des ersten Schritts verwendet wird, oder mit Hilfe eines Erhitzungsmikroskops,
ii) einen zweiten Teilschritt des Haltens der Verdichtungstemperatur während einer Dauer von 1 bis 2 Stunden, und
iii) einen dritten Teilschritt des Abkühlens auf Raumtemperatur mit einer Geschwindigkeit von 10 bis 20 °C/min.

13. Verfahren nach einem der Ansprüche 10 bis 12, **dadurch gekennzeichnet, dass** die selbstheilende Glaszusammensetzung dazu bestimmt ist, als Siegelverbindung in einer Vorrichtung verwendet zu werden, die bei hoher Temperatur arbeitet, und dadurch, dass das Verfahren ferner vor dem dritten Verdichtungsschritt einen zusätzlichen Schritt der Herstellung der Siegelverbindungen mittels der selbstheilenden pulverförmigen Glaszusammensetzung innerhalb der Vorrichtung umfasst, wobei die Vorrichtung, in der die Siegelverbindungen hergestellt wurden, dann der thermischen Verdichtungsbehandlung unterzogen wird.

14. Verfahren nach Anspruch 13, **dadurch gekennzeichnet, dass** die selbstheilende pulverförmige Glaszusammensetzung mindestens einen Zusatz einschließt, der aus den Schlickern, den Bindemittel und den Sinterhilfszusätzen ausgewählt ist.

15. Verfahren nach Anspruch 13 oder 14, **dadurch gekennzeichnet, dass** die thermische Behandlung der selbstheilenden pulverförmigen Glaszusammensetzung gemäß einem Verfahren durchgeführt wird, das neben den oben im Anspruch 12 beschriebenen Teilschritten i) bis iii) einen zusätzlichen Teilschritt vor dem Teilschritt i) umfasst, bei dem die selbstheilende pulverförmige Glaszusammensetzung langsam mit einer Geschwindigkeit von 1 °C/min bis auf eine Temperatur von 450 °C erhitzt wird.

16. Verfahren nach einem der Ansprüche 10 bis 12, **dadurch gekennzeichnet, dass** die selbstheilende Glaszusammensetzung dazu bestimmt ist, für die Herstellung von massiven selbstheilenden Materialien verwendet zu werden und dass das Verfahren ferner, vor der Durchführung des dritten Schritts der Verdichtung, einen Formungsschritt der selbstheilenden pulverförmigen Glaszusammensetzung umfasst.

17. Verfahren nach einem der Ansprüche 10 bis 16, **dadurch gekennzeichnet, dass** die selbstheilende Glaszusammensetzung eine Glaskeramik ist und dass das Verfahren ferner, nach dem dritten Schritt der Verdichtung, einen vierten Schritt der Keramisierung durch thermische Behandlung umfasst.

18. Verwendung einer selbstheilenden Glaszusammensetzung wie in einem der Ansprüche 1 bis 9 definiert, als selbstheilendes Material.

19. Verwendung nach Anspruch 18 zur Herstellung von Siegelverbindungen in Vorrichtungen, die bei einer Temperatur von 400 °C bis 900 °C arbeiten.

20. Verwendung einer selbstheilenden Glaszusammensetzung wie in einem der Ansprüche 1 bis 9 definiert, für die Herstellung eines Schutzüberzugs gegen Korrosion bei hoher Temperatur.
